# EUROPÄISCHE PATENTSCHRIFT

(11) **EP 1 986 887 B1**
(45) Veröffentlichungstag und Bekanntmachung des Hinweises auf die Patenterteilung: **21.04.2010**
(21) Anmeldenummer: 07703802.4
(22) Anmeldetag: 11.01.2007
(51) Int. Cl.: B60R 11/04

(54) **BILDERFASSUNGSEINRICHTUNG FÜR EIN FAHRERASSISTENZSYSTEM**
IMAGE-SENSING DEVICE FOR A DRIVER ASSISTANCE SYSTEM
Dispositif d'acquisition d'image pour un système d'assistance à la conduite

(30) Priorität: 17.02.2006 DE 102006007343
(43) Veröffentlichungstag der Anmeldung: 05.11.2008
(73) Patentinhaber: Robert Bosch GmbH, 70442 Stuttgart (DE)
(72) Erfinder: HAUG, Karsten, 70372 Stuttgart (DE)
(86) Internationale Anmeldenummer: PCT/EP2007/050259
(87) Internationale Veröffentlichungsnummer: WO 2007/093471

(56) Entgegenhaltungen:
- WO-A-2005/090124
- US-A1- 2002 003 571
- "MOBILE OFFICE" CT MAGAZIN FUER COMPUTER TECHNIK, HEISE ZEITSCHRIFTEN VERLAG, HANNOVER, DE, Nr. 9, 22. April 2002 (2002-04-22), Seite 33, XP001102631 ISSN: 0724-8679

## Beschreibung

### Stand der Technik

Die Erfindung betrifft eine Bilderfassungseinrichtung für ein Fahrerassistenzsystem nach dem Oberbegriff des Anspruchs 1.

Aus DE 102 01 612 A1 ist eine Anordnung zur Handhabung eines Kommunikationsgeräts bekannt, welche aus einer universell verwendbaren, nicht mobiltelefon-spezifischen Befestigungseinrichtung und aus einer mobiltelefonspezifischen Gerätehalterung besteht, die im zusammengebauten Zustand die komplette Anordnung ergeben. Dabei enthält die Gerätehalterung die erforderlichen mechanischen und elektrischen bzw. elektronischen Anpassungen an das jeweils zu verwendende Kommunikationsgerät. Die Anordnung ist insbesondere für die Integration von Mobiltelefonen unterschiedlichen Typs in ein Fahrzeug vorgesehen. Während mit dieser bekannten Anordnung ein fahrzeugfester Betrieb von Mobiltelefonen unterschiedlicher Bauart und unterschiedlicher Hersteller möglich erscheint, ist damit eine Integration mobiler Kommunikationsgeräte mit einem Bildsensor, die mit einem Fahrerassistenzsystem zusammenwirken sollen, nicht ohne weiteres möglich.

In der WO 2005/090124 A1 wird ein Bildverarbeitungssystem für Kraftfahrzeuge vorgestellt, welches die Bildverarbeitungsmodule von Kleinstcomputern, insbesondere auch Mobiltelefonen, verwendet. Es werden unter anderem auch mechanische Vorrichtungen beschrieben, die eine Halterung für verschiedene Arten von Mobiltelefonen bieten. Weiterhin wird unter anderem auch beschreiben, wie derartige Geräte in ihrem Betriebstemperaturbereich gehalten werden können.

### Vorteile der Erfindung

Die Erfindung zielt auf eine weitere Verbesserung einer Bilderfassungseinrichtung mit einem mobilen Kommunikationsgerät ab, um dieses als Komponente eines Fahrerassistenzsystems einsetzen zu können. Hierdurch ist es möglich, ein mobiles Kommunikationsgerät mit einem Bildsensor, im Sprachgebrauch häufig auch als "Foto-Handy" bezeichnet, als Bildsensor eines Fahrerassistenzsystems einzusetzen. Dies wird durch einen fahrzeugspezifischen Fahrzeugadapter erreicht, der fahrzeugfest angeordnet ist. Dieser Fahrzeugadapter ermöglicht, unter Zwischenschaltung eines Universalmoduls, die Aufnahme eines gerätespezifischen Geräteadapters, der seinerseits als Halteeinrichtung für das mobile Kommunikationsgerät dient. Auf diese Weise ist eine universelle Verwendbarkeit des mobilen Kommunikationsgeräts sichergestellt. Mit Hilfe der genannten Adapter und des Universalmoduls wird das Kommunikationsgerät in das Fahrzeug integriert. Es wird somit, wenigstens zeitweilig, ein Bestandteil des Fahrzeugs und kann mit dessen Systemen zusammenwirken. Insbesondere ist es ein Bestandteil eines Fahrerassistenzsystems und kann vorteilhaft mit seiner Bildsensorfunktion Videodaten aus der Umgebung des Fahrzeugs erfassen. Wird das mobile Kommunikationsgerät über das Funktionsmodul und den Adapter mit Blickrichtung nach vom montiert, kann der Bildsensor beispielsweise vorteilhaft Fahrbahnmarkierungen erfassen und dadurch eine Spurführung des Fahrzeugs ermöglichen. Gleichermaßen ist ein Einbau mit Blickrichtung nach hinten oder zur Seite möglich. Nach Entnahme des mobilen Kommunikationsgeräts aus dem Fahrzeug kann das Kommunikationsgerät, seiner ursprünglichen Bestimmung gemäß, als autonomes, mobiles Kommunikationsgerät betrieben werden. Der fahrzeugfeste Einsatz des mobilen Kommunikationsgeräts setzt voraus, dass es, nach Integration in das Fahrzeugs, eine genau definierte Einbaulage einnimmt, um sicherzustellen, dass der Bildsensor des Kommunikationsgeräts den vorbestimmten Erfassungsbereich abdeckt. Dies wird vorteilhaft durch eine entsprechende Befestigung der Halteeinrichtung ermöglicht. Die Halteeinrichtung wird vorteilhaft in Höhe des Innenspiegels an der Frontscheibe angeordnet, um dem Bildsensor des Kommunikationsgeräts ein gutes Sichtfeld zu ermöglichen. Durch die konstruktiv festgelegte Lage der Adapter der Halteeinrichtung kann sich vorteilhaft eine Kalibrierung der Anordnung als überflüssig erweisen, da nach dem Einsetzen des Kommunikationsgeräts in die Halteeinrichtung der Bildsensor des Kommunikationsgeräts ohne weitere Justage bereits seine Solllage einnimmt. Vorteilhaft ist die genau Montageposition der Halteeinrichtung kodiert und in der Halteeinrichtung in Form von Daten hinterlegt. Über ein Bussystem des Fahrzeugs, das die Halteeinrichtung in die Systemstruktur des Fahrzeugs einbindet, sind diese Daten abrufbar. Das Fahrerassistenzsystem kann somit die Koordinaten des Montageorts der Halteeinrichtung abrufen und diese vorteilhaft in ein zentrales Koordinatensystem des Fahrzeugs transformieren. Dies ist beispielsweise für die Fahrerassistenzfunktion LDW (Lane Departure Warning) des Fahrerassistenzsystems notwendig. Vorteilhaft umfasst die Halteeinrichtung eine Streulichtblende, die störendes Streulicht von dem Bildsensor des Kommunikationsgeräts fernhält. Weiterhin umfasst die Halteeinrichtung vorteilhaft ein Funktionsmodul oder ggf. mehrere Funktionsmodule, die eine Heizung und/oder Kühlung des Kommunikationsgeräts ermöglichen, um dieses auf einer möglichst konstanten Betriebstemperatur zu halten. Dies ist im Sinne einer hohen Betriebssicherheit vorteilhaft, da das Kommunikationsgerät an seiner exponierten Einbaulage hinter der Frontscheibe des Fahrzeugs starken Temperaturwechselbeanspruchungen ausgesetzt ist. Dies ist auch deshalb zweckmäßig, weil Kommunikationsgeräte für den Einsatz im Konsumerbereich nur in einem vergleichsweise engen Temperaturbereich funktionsfähig sind. Für eine fahrzeugspezifische Anwendung ist jedoch ein weiterer Temperaturbereich zu berücksichtigen. Durch die genannte Maßnahme wird die Verfügbarkeit erhöht. Beschädigungen infolge starker Temperaturbeanspruchung können vermieden werden. Sehr komfortable Fahrerassistenzsysteme ermöglichen, in gewissen Grenzen, eine fahrerspezifische Adaption bestimmter Parameter. So kann beispielsweise in Zusammenhang mit der Funktion LDW festgelegt werden, ob ein entsprechender Wamhinweis zeitlich früh, später oder adaptiv, wie beispielsweise geschwindigkeitsabhängig, erfolgen soll. Vorteilhaft ist vorgesehen, diese fahrerspezifischen Vorschriften in dem Geräteadapter zu speichern. Sie stehen dem Fahrer dann ohne weiteres wieder zur Verfügung, wenn er, bei einem erforderlichen Fahrzeugwechsel, sein mobiles Kommunikationsgerät zusammen mit dem Geräteadapter in die Halteeinrichtung eines anderen Fahrzeugs einsteckt.

### Zeichnung

Ein Ausführungsbeispiel der Erfindung wird im Folgenden unter Bezug auf die Zeichnung näher erläutert. Dabei zeigt
- Figur 1: einen Längsschnitt durch das Dach und die Frontscheibe eines Fahrzeugs;
- Figur 2: ein Blockdiagramm zur Erläuterung der Koordinatenbeziehungen;
- Figur 3: ein Blockdiagramm eines Fahrerassistenzsystems.

### Beschreibung der Ausführungsbeispiele

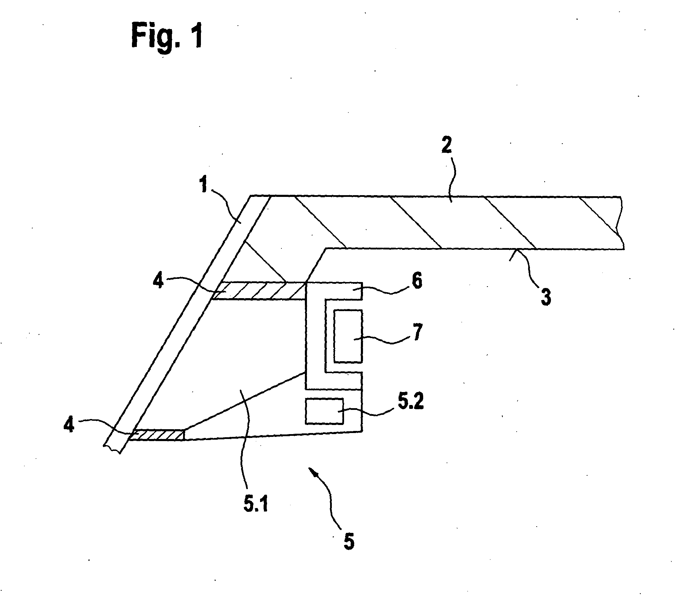

Figur 1 zeigt einen Längsschnitt durch das Dach 2 und die Frontscheibe 1 eines in Figur 1 nur teilweise dargestellten Fahrzeugs 10. Mit Bezugsziffer 3 ist der dem Fahrgastraum des Fahrzeugs 10 zugewandte Dachhimmel 3 des Dachs 2 bezeichnet. Die Schnittdarstellung ermöglicht den Blick auf einen auf der Innenseite der Frontscheibe 1 angeordneten Fahrzeugadapter 4, der sich formschlüssig an die Innenseite der Frontscheibe 1 und den Dachhimmel 3 anschmiegt. Der Fahrzeugadapter 4 ist somit fahrzeugspezifisch ausgestaltet und ermöglicht somit eine einfache Anpassung an unterschiedliche Neigungen von Frontscheiben und Gestalt des Dachhimmels verschiedener Fahrzeugtypen. Der Fahrzeugadapter 4 ist mit einem Universalmodul 5 verbunden, das eine Streulichtblende 5.1 und ein Elektronikmodul 5.2 umfasst. In Zusammenwirken mit dem Fahrzeugadapter 4 schirmt die Streulichtblende 5.1 den Bildsensor des mobilen Kommunikationsgeräts gegen unerwünschtes Streulicht aus dem Innenraum des Fahrzeugs und von außerhalb des Messbereichs ab und begrenzt zugleich das Sichtfeld des Bildsensors. Das Elektronikmodul 5.2 umfasst eine Energieversorgungseinrichtung für die Energieversorgung des mobilen Kommunikationsgeräts, eine Schnittstelle für die Anbindung des mobilen Kommunikationsgeräts an Systeme des Fahrzeugs 10 und ggf. Bedienelemente, die eine Bedienung des mobilen Kommunikationsgeräts ermöglichen, wenn dieses in das Fahrzeug 10 eingebaut ist. Mit Bezugsziffer 6 ist weiterhin ein Geräteadapter bezeichnet, der das mobile Kommunikationsgerät 7 aufnimmt und dieses lage- und funktionsmäßig mit dem Universalmodul 5 verbindet. Dies bedeutet, dass der Geräteadapter 6 das mobile Kommunikationsgerät 7 einerseits mechanisch mit dem Universalmodul 5 verbindet und dieses dabei so ausrichtet, dass der Bildsensor des mobilen Kommunikationsgeräts 7 auf den für ihn vorgesehenen Erfassungsbereich ausgerichtet ist. Andererseits stellt der Geräteadapter 6 elektrische Verbindungen zwischen dem mobilen Kommunikationsgerät 7 und dem Elektronikmodul 5.2 des Universalmoduls 5 her, um die Energieversorgung des mobilen Kommunikationsgeräts 7 aus dem Bordnetz des Fahrzeugs 10 und eine Datenkommunikation zwischen dem mobilen Kommunikationsgerät 7 und Systemen des Fahrzeugs 10 zu ermöglichen. Die vorstehend genannten Baugruppen mit den Bezugsziffern 4, 5, 6 und 7 sind mechanisch miteinander verbunden und so zueinander ausgerichtet, dass der Bildsensor des mobilen Kommunikationsgeräts 7 den vorgesehenen Erfassungsbereich abdeckt. Soweit erforderlich sind in der Zeichnung nicht dargestellte Justiermittel, wie Stellschrauben und dergleichen, vorgesehen, um mechanische Toleranzen auszugleichen und die geforderte Justierung zu ermöglichen. Da das mobile Kommunikationsgerät 7 häufig in den Geräteadapter 6 ein- und aus diesem ausgebaut werden muss, ist hier eine auch ohne Werkzeug zu betätigende Rastverbindung zu empfehlen.

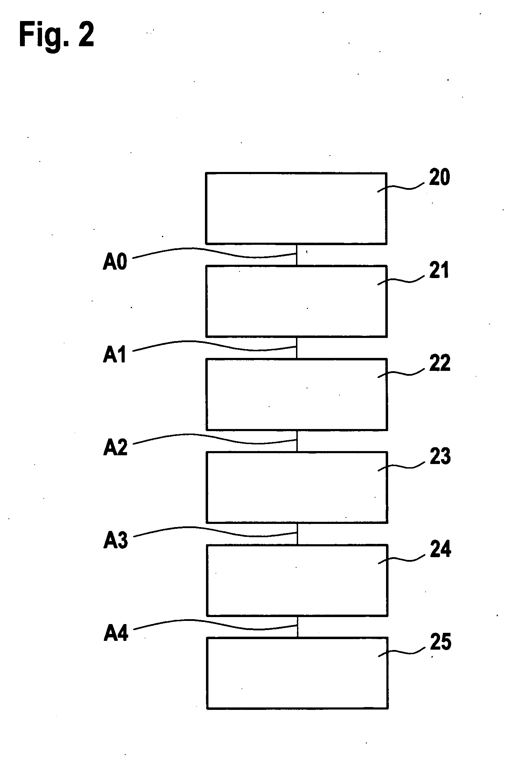

Das in Figur 2 dargestellte Blockdiagramm soll die Ausrichtung des Bildsensors des mobilen Kommunikationsgeräts 7 auf die Karosserie des Fahrzeugs 10 verdeutlichen. Jeder der in Figur 2 dargestellten Blöcke stellt beispielhaft eine Baugruppe des Fahrzeugs 10 bzw. der Bilderfassungseinrichtung für das mobile Kommunikationsgerät 7 dar. So repräsentiert Block 20 die Karosserie des Fahrzeugs 10. Der Block 21 repräsentiert die Frontscheibe 1 des Fahrzeugs 10. Der Block 22 repräsentiert den Fahrzeugadapter 4. Der Block 23 repräsentiert das Universalmodul 5. Der Block 24 repräsentiert den Geräteadapter 6. Der Block 25 schließlich repräsentiert das mobile Kommunikationsgerät mit dem Bildsensor. Die Operatoren A0, A1, A2, A3, A4 zwischen den Blöcken repräsentieren Transformationsregeln zwischen den jeweiligen lokalen Lagekoordinaten in Bezug auf ein geeignetes Koordinatensystem, beispielsweise ein Koordinatensystem nach DIN 70000. Der Operator A0 wird bestimmt durch die Position und Orientierung der Frontscheibe 1 in Bezug zu der Karosserie des Fahrzeugs 10. Das bedeutet in der Praxis, dass der Fahrzeugadapter fahrzeugspezifisch ausgebildet werden muss. Bei sehr hohen Präzisionsansprüchen kann A1 durch Kallbrierelemente, wie beispielsweise Stellschrauben, Unterlegelemente und dergleichen an das individuelle Fahrzeug angepasst werden, um ggf. vorhandene Toleranzen auszugleichen. Dies kann während der Produktion des Fahrzeugs 10 oder, etwa im Rahmen einer Nachrüstung, in einer Werkstatt durchgeführt werden. Der Operator A2 ist konstant und durch die Konstruktion des Universalmoduls 5 vorgegeben. Der Operator A3 ist gerätespezifisch angepasst. Der Operator A4 ist wiederum konstant und durch das mobile Kommunikationsgerät 7 vorgegeben. Die Verknüpfung der Operatoren führt zu einer Gesamttransformation Ages, die die Ausrichtung des mobilen Kommunikationsgeräts 7 in Bezug auf die Karosserie des Fahrzeugs 10 festlegt:
Ages = A0*A1*A2*A3*A4

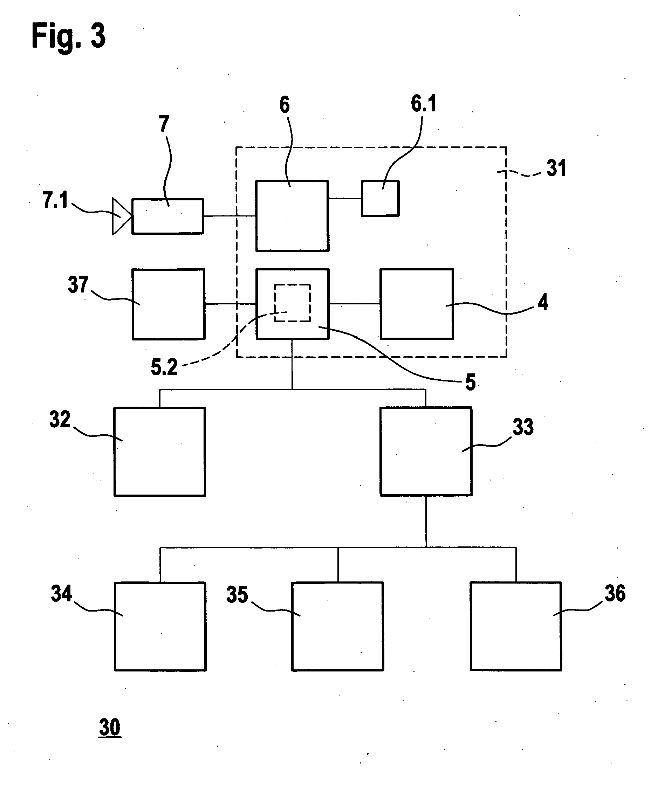

Die exakte Ausrichtung des Bildsensors des mobilen Kommunikationsgeräts 7 wird wesentlich durch den Geräteadapter 6 bestimmt (Operator A3). Daher werden zweckmäßig in dem Geräteadapter 6 Auflagepunkte oder Auflageflächen vorgesehen, die eine sichere Lage des mobilen Kommunikationsgeräts 7 und damit eine exakte Ausrichtung des Bildsensors des mobilen Kommunikationsgeräts sicherstellen. Nach Einsetzen des mobilen Kommunikationsgeräts 7 in den Geräteadapter 6 und dessen Andocken an das Universalmodul 5 ist das mobile Kommunikationsgerät 7 für den fahrzeugfesten Betrieb vorbereitet. Wie anhand des in Figur 3 dargestellten Blockdiagramms verdeutlicht ist, sind das mobile Kommunikationsgerät 7 und dessen Bildsensor 7.1 nunmehr integrale Bestandteile eines Fahrerassistenzsystems 30. Bei Anordnung der Bilderfassungseinrichtung in der oben schon beschriebenen Lage, kann der Bildsensor 7.1 des mobilen Kommunikationsgeräts 7 als vorausschauender Sensor eingesetzt werden und, beispielsweise in Zusammenhang mit einer Fahrenassistenzfunktion wie LDW (Lane Departure Waming), die Detektion von Fahrspurmarkierungen ermöglichen. Selbstverständlich sind, bei entsprechender Anordnung der Bilderfassungseinrichtung auch andere Einsatzmöglichkeiten des Bildsensors 7.1 denkbar. So kann er als rückschauender Sensor Anwendung finden, wenn die Bilderfassungseinrichtung im Heckbereich des Fahrzeugs 10 angeordnet ist. Bei Anordnung der Bilderfassungseinrichtung in dem Seitenbereich des Fahrzeugs 10 kann der Bildsensor 7.1 als seitwärts schauender Sensor eingesetzt werden. Wie in Figur 3 durch eine entsprechende Umrahmung angedeutet umfasst die Bilderfassungseinrichtung 31 die Baugruppen 4, 5 und 6. Das Elektronikmodul 5.2 des Universalmoduls 5 ist mit dem Bordnetz 32 des Fahrzeugs 10 verbunden und ermöglicht so die Energieversorgung des mobilen Kommunikationsgeräts in dem eingebauten Zustand. Weiterhin ist das Elektronikmodul 5.2 mit einem Steuergerät 33 des Fahrerassistenzsystems 30 verbunden, das die Ausgangssignale des Bildsensors 7.1 oder bereits davon abgeleitete Größen verarbeitet. In Abhängigkeit von den Ausgangssignalen des Bildsensors 7.1 kann das Steuergerät 33 eine Warneinrichtung 36 oder auch das Lenksystem 34 des Fahrzeugs, das Bremssystem 35 oder beide Systeme steuern, um Fahrerassistenzfunktionen wie LDW (Lane Departure Warning) oder LKS (Lane Keeping System) zu ermöglichen. Wird ein und dasselbe Fahrzeug längere Zeit mit dem mobilen Kommunikationsgerät 7 betrieben, kann der Geräteadapter 6 vorteilhaft in dem Fahrzeug verbleiben. Nach Abstellen des Fahrzeugs kann das mobile Kommunikationsgerät 7 auf einfache Weise von dem Geräteadapter 6 getrennt und am Mann getragen werden. Es erfüllt dann wieder seine Funktion als mobiles Telefon ("Handy" bzw. PDA d.h. Personal Digital Assistant). Bei einem Fahrzeugwechsel wird der Geräteadapter 6 an das Universalmodul einer in dem neuen Fahrzeug vorhandenen Halteeinrichtung "angedockt". Das mobile Kommunikationsgerät 7 kann dann in dem neuen Fahrzeug weiter verwendet werden. Besonders vorteilhaft umfasst der Geräteadapter 6 eine Speichereinrichtung, in der fahrerspezifische Kennwerte gespeichert werden können und damit portabel sind, also mit dem Geräteadapter in ein neues Fahrzeug eingebracht werden können. Im Zusammenhang mit der Fahrerassistenzfunktion LDW kann es sich bei diesen Kennwerten beispielsweise um eine fahrerspezifische Warnstrategie handeln. Bei dieser ist beispielsweise im Rahmen einer Warnstrategie festgelegt, ob bei dem bevorstehenden Verlassen einer Fahrspur eine Warnung, früh oder spät oder auch adaptiv ausgegeben werden soll. Der Fahrer findet damit auch in einem neuen Fahrzeug bereits einen Teil seiner gewohnten Fahrerassistenzfunktionen vor und wird dies als besonders komfortabel bewerten. Bei einem Wechsel des mobilen Kommunikationsgeräts 7 muss ein ggf. an dieses angepasster Geräteadapter 6 beschafft werden.

Wenn die Halteeinrichtung 31 in dem Bereich des Innenspiegels an der Innenseite der Frontscheibe 1 des Fahrzeugs 10 angeordnet ist, wird das in der Halteeinrichtung 31 gehalterte mobile Kommunikationsgerät 7 besonders harten Umweltbedingungen, wie insbesondere starken Temperaturschwankungen, ausgesetzt. Im Interesse einer hohen Betriebssicherheit ist besonders eine Kühlung zweckmäßig. Vorteilhaft und besonders kostengünstig kann eine passive Kühlung dadurch bewirkt werden, dass die Komponenten der Halteeinrichtung 31, wie Fahrzeugadapter 4, Universalmodul 5 und Geräteadapter 6 gut Wärme leitend mit der Frontscheibe 1 des Fahrzeugs 10 verbunden sind. Durch eine gute thermische Kopplung kann dann die in dem mobilen Kommunikationsgerät 7 und in dem Universalmodul 5 entstehende Verlustwärme an die Frontscheibe 1 abgeführt werden. In einer weiteren Ausführungsvariante kann die Halteeinrichtung 31 wenigstens ein Peltierelement für die Kühlung kritischer Komponenten umfassen. In einer weiteren Ausführungsvariante kann eine aktive Kühlung durch einen in dem Universalmodul 5 angeordneten Ventilator erfolgen, der gleichzeitig dafür sorgt, dass die Optik des Bildsensors 7.1 und die Frontscheibe 1, wenigstens in dem Sichtbereich des Bildsensors 7.1, beschlagfrei bleiben. In einer weiteren Ausführungsvariante ist der Fahrzeugadapter 4 an die Klimaanlage des Fahrzeugs 10 oder an eine sonstige Kühl- oder Heizeinrichtung angeschlossen. Teile der Halteeinrichtung 31 und das in ihr angeordnete mobile Kommunikationsgerät können dann vorteilhaft mittels der Klimaanlage des Fahrzeugs temperiert werden.

Angesehen von den bereits erwähnten Fahrerassistenzfunktionen wie LDW und LKS ist die Bilderfassungseinrichtung vorteilhaft für weitere Fahrerassistenzfunktionen, wie beispielsweise Verkehrszeichenerkennung, videobasiertes ACC (ACC = Automative Cruise Control) oder Nachtsichtanwendungen (Night Vision Systems) anwendbar.

## Patentansprüche

1. Bilderfassungseinrichtung für ein Fahrerassistenzsystem (30) mit einem einen Bildsensor (7.1) umfassenden mobilen Kommunikationsgerät (7) und eine Halteeinrichtung (31) für die Halterung des mobilen Kommunikationsgeräts (7) in einem Fahrzeug, **wobei die Halteeinrichtung (31) einen Geräteadapter (6) für die Aufnahme des Kommunikationsgeräts (7) umfasst, dadurch gekennzeichnet, dass der Geräteadapter (6) eine Speichereinrichtung (6.1) umfasst.**

2. Bilderfassungseinrichtung nach Anspruch 1, **dadurch gekennzeichnet, dass** die Halteeiniichtung (31) einen Geräteadapter (6) für die Aufnahme des Kommunikationsgeräts (7), einen fahrzeugfest angeordneten Fahrzeugadapter (4) und ein zwischen dem Fahrzeugadapter (4) und dem Geräteadapter (6) angeordnetes Universalmodul (5) umfasst.

3. Bilderfassungseinrichtung nach einem der vorhergehenden Ansprüche, **dadurch gekennzeichnet, dass** der Fahrzeugadapter (4) fahrzeugfest an einer genau definierten Position in dem Fahrzeug (10) angeordnet ist, derart dass der Bildsensor (7.1) des Kommunikationsgeräts (7) nach Einfügen des das Kommunikationsgerät (7) tragenden Geräteadapters (6) in das Universalmodul (5) einen vorgebbaren Erfassungsbereich aus dem Umfeld des Fahrzeugs (10) erfasst.

4. Bilderfassungseinrichtung nach einem der vorhergehenden Ansprüche, **dadurch gekennzeichnet, dass** das Universalmodul (5) eine Streulichtblende (5.1) umfasst, die störendes Streulicht von dem Bildsensor (7.1) des in die Bilderfassungseinrichtung (31) eingebauten Kommunikationsgeräts (7) fernhält.

5. Bilderfassungseinrichtung nach einem der vorhergehenden Ansprüche, **dadurch gekennzeichnet, dass** das Universalmodul (5) ein Elektronikmodul (5.2) umfasst.

6. Bilderfassungseinrichtung nach einem der vorhergehenden Ansprüche, **dadurch gekennzeichnet, dass** das Elektronikmodul (5.2) mit dem Bordnetz (32) des Fahrzeugs (10) verbunden ist und eine Energieversorgung des mobilen Kommunikationsgeräts (7) aus dem Bordnetz (32) des Fahrzeugs (10) ermöglicht.

7. Bilderfassungseinrichtung nach einem der vorhergehenden Ansprüche, **dadurch gekennzeichnet, dass** das Elektronikmodul (5.2) eine Datenschnittstelle für die Weiterleitung von Ausgangssignalen des Bildsensors (7.1) an Systeme des Fahrzeugs (10) umfasst.

8. Bilderfassungseinrichtung nach einem der vorhergehenden Ansprüche, **dadurch gekennzeichnet, dass** das Elektronikmodul (5.2) mit dem Steuergerät (33) eines Fahrerassistenzsystems (30) verbunden ist.

9. Bilderfassungseinrichtung nach einem der vorhergehenden Ansprüche, **dadurch gekennzeichnet, dass** eine Kühleinrichtung (37) für das mobile Kommunikationsgerät (7) vorgesehen ist.

10. Bilderfassungseinrichtung nach einem der vorhergehenden Ansprüche, **dadurch gekennzeichnet, dass** die Kühleinrichtung (37) in dem Universalmodul (5) angeordnet ist.

11. Bilderfassungseinrichtung nach einem der vorhergehenden Ansprüche, **dadurch gekennzeichnet, dass** die Kühleinrichtung (37) einen Ventilator umfasst, dessen Luftstrom auch wenigstens einen Teilbereich der Frontscheibe (1) des Fahrzeugs (10) und/oder die Optik des Bildsensors (7.1) beschlagfrei hält.

12. Bilderfassungseinrichtung nach einem der vorhergehenden Ansprüche, **dadurch gekennzeichnet, dass** Komponenten der Bilderfassungseinrichtung (31) durch die Klimaanlage des Fahrzeugs (10) kühlbar sind und dass zu diesem Zweck der Fahrzeugadapter (4) mit der Klimaanlage des Fahrzeugs (10) verbunden ist.

13. Bilderfassungseinrichtung nach einem der vorhergehenden Ansprüche, **dadurch gekennzeichnet, dass** der Geräteadapter (6) eine an ein spezifisches mobiles Kommunikationsgerät (7) angepasste Schnittstelle und eine an ein Universalmodul (5) angepasste Schnittstelle umfasst.

14. Verwendung einer Bilderfassungeinrichtung nach einem der Ansprüche 1-13 in einem Fahrzeug.

## Claims

1. Image-capturing device for a driver assistance system (30) having a mobile communication device (7) which comprises an image sensor (7.1), and a securing device (31) for securing the mobile communication device (7) in a vehicle, wherein the securing device (31) comprises a device adaptor (6) for holding the communication device (7), **characterized in that** the device adaptor (6) comprises a memory device (6.1).

2. Image-capturing device according to Claim 1, **characterized in that** the securing device (31) comprises a device adaptor (6) for accommodating the communication device (7), a vehicle adaptor (4) which is arranged fixed to the vehicle, and a universal module (5) which is arranged between the vehicle adaptor (4) and the device adaptor (6).

3. Image-capturing device according to one of the preceding claims, **characterized in that** the vehicle adaptor (4) is arranged fixed to the vehicle at a precisely defined position in the vehicle (10) in such a way that, after the device adaptor (6) which is fitted with the communication device (7) has been inserted into the universal module (5), the image sensor (7.1) of the communication device (7) captures a predefinable capture range of the area surrounding the vehicle (10).

4. Image-capturing device according to one of the preceding claims, **characterized in that** the universal module (5) comprises a scattered light diaphragm (5.1) which keeps disruptive scattered light away from the image sensor (7.1) of the communication device (7) which is installed in the image-capturing device (31).

5. Image-capturing device according to one of the preceding claims, **characterized in that** the universal module (5) comprises an electronic module (5.2).

6. Image-capturing device according to one of the preceding claims, **characterized in that** the electronic module (5.2) is connected to the on-board power system (32) of the vehicle (10), and permits power to be supplied to the mobile communication device (7) from the on-board power system (32) of the vehicle (10).

7. Image-capturing device according to one of the preceding claims, **characterized in that** the electronic module (5.2) comprises a data interface for passing on output signals of the image sensor (7.1) to systems of the vehicle (10).

8. Image-capturing device according to one of the preceding claims, **characterized in that** the electronic module (5.2) is connected to the control device (33) of a driver assistance system (30).

9. Image-capturing device according to one of the preceding claims, **characterized in that** a cooling device (37) is provided for the mobile communication device (7).

10. Image-capturing device according to one of the preceding claims, **characterized in that** the cooling device (37) is arranged in the universal module (5).

11. Image-capturing device according to one of the preceding claims, **characterized in that** the cooling device (37) comprises a fan, the airstream of which also keeps at least part of the front windscreen (1) of the vehicle (10) and/or the optics of the image sensor (7.1) free of precipitation.

12. Image-capturing device according to one of the preceding claims, **characterized in that** components of the image-capturing device (31) can be cooled by the air-conditioning system of the vehicle (10), and **in that** for this purpose the vehicle adaptor (4) is connected to the air-conditioning system of the vehicle (10).

13. Image-capturing device according to one of the preceding claims, **characterized in that** the device adaptor (6) comprises an interface adapted to a specific mobile communication device (7) and an interface adapted to a universal module (5).

14. Use of an image capturing device according to one of Claims 1-13 in a vehicle.

## Revendications

1. Dispositif de saisie d'images pour système (30) d'assistance au conducteur, présentant un appareil de communication mobile (7) qui comprend un détecteur d'images (7.1) et un dispositif de maintien (31) qui maintient l'appareil de communication mobile (7) dans un véhicule,
le dispositif de maintien (31) comprenant un adaptateur d'appareil (6) qui reçoit l'appareil de communication (7),
**caractérisé en ce que**
l'adaptateur d'appareil (6) comprend un dispositif de mémoire (6.1).

2. Dispositif de saisie d'images selon la revendication 1, **caractérisé en ce que** le dispositif de maintien (31) comprend un adaptateur d'appareil (6) qui reprend l'appareil de communication (7), un adaptateur de véhicule (4) fixé sur le véhicule et un module universel (5) disposé entre l'adaptateur de véhicule (4) et l'adaptateur d'appareil (6).

3. Dispositif de saisie d'images selon l'une des revendications précédentes, **caractérisé en ce que** l'adaptateur de véhicule (4) est fixé dans le véhicule (10) en une position définie avec précision de telle sorte que le détecteur d'images (7.1) de l'appareil de communication (7) saisisse une zone prédéterminée de saisie de l'environnement du véhicule (10) lorsque l'adaptateur d'appareil (6) qui porte l'appareil de communication (7) a été inséré dans le module universel (5).

4. Dispositif de saisie d'images selon l'une des revendications précédentes, **caractérisé en ce que** le module universel (5) comprend un écran (5.1) à lumière diffuse qui éloigne la lumière diffuse perturbatrice émise par le détecteur d'images (7.1) de l'appareil de communication (7) monté dans le dispositif (31) de saisie d'images.

5. Dispositif de saisie d'images selon l'une des revendications précédentes, **caractérisé en ce que** le module universel (5) comprend un module électronique (5.2).

6. Dispositif de saisie d'images selon l'une des revendications précédentes, **caractérisé en ce que** le module électronique (5.2) est relié au réseau de bord (32) du véhicule (10) et permet d'alimenter en énergie l'appareil de communication (7) à partir du réseau de bord (32) du véhicule (10).

7. Dispositif de saisie d'images selon l'une des revendications précédentes, **caractérisé en ce que** le module électronique (5.2) comprend une interface de données qui transmet des signaux d'entrée du détecteur d'images (7.1) à des systèmes du véhicule (10).

8. Dispositif de saisie d'images selon l'une des revendications précédentes, **caractérisé en ce que** le module électronique (5.2) est relié à l'appareil de commande (33) d'un système (30) d'assistance au conducteur.

9. Dispositif de saisie d'images selon l'une des revendications précédentes, **caractérisé en ce qu'**un dispositif de refroidissement (37) de l'appareil mobile de communication (7) est prévu.

10. Dispositif de saisie d'images selon l'une des revendications précédentes, **caractérisé en ce que** le dispositif de refroidissement (37) est disposé dans le module universel (5).

11. Dispositif de saisie d'images selon l'une des revendications précédentes, **caractérisé en ce que** le dispositif de refroidissement (37) comprend un ventilateur dont l'écoulement d'air protège des précipitations au moins une partie du pare-brise (1) du véhicule (10) et/ou l'optique du détecteur d'images (7.1).

12. Dispositif de saisie d'images selon l'une des revendications précédentes, **caractérisé en ce que** des composants du dispositif (31) de saisie d'images peuvent être refroidis par l'installation de climatisation du véhicule (10) et **en ce que** l'adaptateur de véhicule (4) est relié dans ce but à l'installation de climatisation du véhicule (10).

13. Dispositif de saisie d'images selon l'une des revendications précédentes, **caractérisé en ce que** l'adaptateur d'appareil (6) comprend une interface adaptée à l'appareil de communication mobile (7) particulier et une interface adaptée au module universel (5).

14. Utilisation d'un dispositif de saisie d'images selon l'une des revendications 1 à 13 dans un véhicule.
